# FASCICULE DE BREVET EUROPEEN

(11) **EP 3 046 787 B1**
(45) Date de publication et mention de la délivrance du brevet: **21.06.2017**
(21) Numéro de dépôt: 14765912.2
(22) Date de dépôt: 09.09.2014
(51) Int. Cl.: B60H 1/00

(54) **DISPOSITIF DE CONDITIONNEMENT D'AIR POUR VÉHICULE AUTOMOBILE À DOUBLE FLUX INTÉGRANT UN RÉPARTITEUR DE CHALEUR**
KLIMAANLAGE FÜR EIN KRAFTFAHRZEUG MIT ZWEITEILIGEM STROM MIT EINEM WÄRMEVERTEILER
AIR CONDITIONING DEVICE FOR A MOTOR VEHICLE WITH DUAL STREAM INCORPORATING A HEAT DISTRIBUTOR

(30) Priorité: 19.09.2013 FR 1358992
(43) Date de publication de la demande: 27.07.2016
(73) Titulaire: Valeo Systemes Thermiques, 78320 Le Mesnil Saint Denis (FR)
(72) Inventeur: LOUP, Didier C/o Valeo Systèmes Thermiques, 78322 Le Mesnil Saint-Denis cédex (FR); MARTINELL, Amanda C/o Valeo Systèmes Thermiques, 78322 Le Mesnil Saint-Denis cédex (FR); AILLOUD, Fabrice C/o Valeo Systèmes Thermiques, 78322 Le Mesnil Saint-Denis cédex (FR); VINCENT, Philippe C/o Valeo Systèmes Thermiques, 78322 Le Mesnil Saint-Denis cédex (FR)
(74) Mandataire: Metz, Gaëlle
(86) Numéro de dépôt international: PCT/EP2014/069201
(87) Numéro de publication internationale: WO 2015/039928

(56) Documents cités:
- DE-A1-102012 004 655
- DE-B3- 10 261 177
- FR-A1- 2 844 483
- US-A1- 2011 005 720

## Description

L'invention concerne un dispositif de conditionnement d'air de véhicule automobile comportant des moyens pour chauffer, ventiler et rafraîchir l'air de l'habitacle, afin notamment de régulier la température dans l'habitacle et de désembuer ses vitres.

### ARRIERE PLAN DE L'INVENTION

Un tel dispositif est généralement implanté entre les sièges avant et le tableau de bord du véhicule qu'il équipe. Il comporte un carter délimitant une enceinte interne ayant plusieurs entrées d'air et plusieurs sorties d'air, cette enceinte renfermant un évaporateur pour refroidir l'air et un radiateur pour le réchauffer.

Différents systèmes de volets et autres obturateurs ajustables sont également prévus pour régler les débits d'air dans l'évaporateur, dans le radiateur et dans les entrées et sorties d'air, de manière à réguler la température de l'air traité.

Un tel dispositif est avantageusement du type à double flux d'air : un flux d'air dit supérieur entre et sort par des entrées et sorties située dans une portion supérieure de l'enceinte, et un flux d'air dit inférieur entre et sort par des entrées et sorties situées dans une portion inférieure de l'enceinte.

Deux systèmes de soufflerie distincts forcent la circulation des flux supérieur et inférieur de manière indépendante, pour que le flux supérieur traverse la portion supérieure de l'évaporateur et du radiateur, et pour que le flux inférieur traverse les portions inférieures de ces éléments. Le document US2011/005720 décrit un tel système.

Le flux supérieur permet par exemple de réguler la température dans la portion supérieure de l'habitacle et de désembuer les vitres avant du véhicule, alors que le flux inférieur permet par exemple de réguler la température dans la portion inférieure de l'habitacle.

Les flux peuvent en outre être dédoublés latéralement : dans ce cas, l'enceinte comporte une paroi interne centrale orientée verticalement qui la partage en deux parties symétriques par rapport à cette paroi. Le flux supérieur comporte alors une partie gauche et une partie droite pour réguler la température respectivement des parties gauche et droite de la portion supérieure de l'habitacle. Il en va de même du flux inférieur.

Dans un tel système, le flux supérieur traverse la moitié supérieure du radiateur, et le flux inférieur traverse la moitié inférieure du radiateur, ce qui est pénalisant dans le cas où les utilisateurs désactivent l'un des flux : la puissance thermique du flux restant est alors limitée à la moitié de la puissance thermique pouvant être fournie par le radiateur.

### OBJET DE L'INVENTION

Le but de l'invention est de proposer une solution pour remédier à cet inconvénient.

### RESUME DE L'INVENTION

A cet effet, l'invention a pour objet un dispositif de conditionnement d'air de véhicule automobile du type à double flux, comportant une enceinte renfermant un évaporateur et un radiateur, agencée pour qu'un flux d'air inférieur admis par une entrée inférieure de l'enceinte traverse successivement une portion inférieure de l'évaporateur et du radiateur avant d'être refoulé par une sortie inférieure de l'enceinte, et pour qu'un flux d'air supérieur admis par au moins une entrée d'air supérieure de l'enceinte traverse successivement une portion supérieure de l'évaporateur et du radiateur avant d'être refoulé par une sortie supérieure de l'enceinte, ce dispositif comportant un premier volet de répartition situé entre l'évaporateur et le radiateur et un second volet de répartition situé entre le radiateur et au moins une sortie d'air, chaque volet de répartition étant un volet rotatif séparant le flux inférieur du flux supérieur en ayant un bord longeant une face du radiateur tout en étant mobile entre une position supérieure et une position inférieure, pour ajuster la répartition des sections de passage du flux inférieur et du flux supérieur à travers le radiateur.

Lorsque les volets de répartition sont en position haute, l'aire de la section de radiateur traversée par le flux inférieur est significativement plus importante que l'aire de la section de radiateur traversée par le flux supérieur. Lorsque les volets sont en position basse, c'est au contraire le flux supérieur qui traverse la section de radiateur ayant l'aire la plus importante. L'invention permet ainsi de répartir la puissance thermique apportée au flux supérieur et au flux inférieur.

L'invention concerne également un dispositif tel que défini ci-dessus, comportant un troisième volet situé entre d'une part les entrées d'air supérieure et inférieure et d'autre part l'évaporateur, ce troisième volet étant mobile entre une position déployée dans laquelle il sépare le flux admis par l'entrée supérieure du flux admis par l'entrée inférieure, et une position rétractée de libre circulation entre l'entrée d'air supérieure et l'entrée d'air inférieure et l'évaporateur.

L'invention concerne également un dispositif tel que défini ci-dessus, comportant une paroi interne séparant l'enceinte en une partie gauche et une partie droite, et comportant un premier volet gauche de répartition et un premier volet droit de répartition qui sont montés symétriquement de part et d'autre de cette paroi, ainsi qu'un second volet gauche de répartition et un second volet droit de répartition montés symétriquement de part et d'autre de la paroi centrale.

L'invention concerne également un dispositif tel que défini ci-dessus, dans lequel l'enceinte comporte une extension gauche et une extension droite délimitant chacune un canal contournant la portion inférieure du radiateur, ces extensions gauche et droite débouchant respectivement en partie gauche et en partie droite d'une région située en aval du radiateur, chaque extension intégrant un volet de régulation de débit, de manière à établir en partie gauche et en partie droite de la région aval du radiateur un flux gauche et un flux droite ayant des températures différentes.

L'invention concerne également un dispositif tel que défini ci-dessus, dans lequel les extensions s'étendent sous le radiateur lorsque le dispositif est en place dans un véhicule.

L'invention concerne également un dispositif tel que défini ci-dessus, dans lequel les extensions s'étendent latéralement par rapport à la portion inférieure du radiateur lorsque les dispositif est en place dans un véhicule.

### BREVE DESCRIPTION DES FIGURES

La figure 1 est une vue latérale en coupe de la partie gauche du dispositif de conditionnement d'air selon l'invention en configuration normale ;
La figure 2 est une vue latérale en coupe de la partie gauche du dispositif de conditionnement d'air selon l'invention dans une configuration favorisant l'apport de chaleur au flux inférieur ;
La figure 3 est une vue latérale en coupe de la partie gauche du dispositif de conditionnement d'air selon l'invention fonctionnant à simple flux ;
La figure 4 est une vue latérale en coupe d'une première variante de la partie gauche du dispositif de conditionnement d'air selon l'invention équipé d'un organe de mélange placé en position basse par rapport au radiateur ;
La figure 5 est une vue latérale en coupe d'une seconde variante du de la partie gauche dispositif de conditionnement d'air selon l'invention équipé d'organes de mélange d'air déportés latéralement par rapport au radiateur.

### DESCRIPTION DETAILLEE DE L'INVENTION

L'idée à la base de l'invention est de moduler la section de passage du flux inférieur et du flux supérieur à travers le radiateur de manière notamment à accroître la section de passage de l'un des flux lorsque l'autre flux est désactivé.

Le dispositif de conditionnement selon l'invention qui est représenté dans les figures en y étant repéré par 1 comporte un carter 2 délimitant une enceinte interne qui renferme un évaporateur 3 pour rafraîchir l'air et un radiateur 4 pour le réchauffer.

Ce carter 2 comporte dans sa région inférieure une entrée d'air inférieure commune 6 située en amont de l'évaporateur 3, et une sortie d'air inférieure gauche 7 située en aval du radiateur 4 ainsi qu'une sortie d'air inférieure droite. L'air du flux inférieur est ainsi admis par l'entrée 6 avant d'être dédoublé et de traverser successivement une portion inférieure de l'évaporateur 3 et une portion inférieure du radiateur 4 pour être refoulé par les sorties inférieures gauche et droite. La circulation du flux inférieur est forcée par un système de ventilation non visible dans les figures.

La circulation du flux supérieur est quant à elle forcée par une ventilation à volute, repérée par 8, qui alimente une entrée supérieure commune 9 du carter 2. Ce flux supérieur est ensuite dédoublé pour traverser successivement les parties gauche et droite d'une portion supérieure de l'évaporateur 3 et du radiateur 4, avant d'arriver dans les parties gauche et droite d'une cavité haute du carter repérée par 11.

Le radiateur 4 ainsi que l'évaporateur 3 sont l'un et l'autre parallélépipédiques, et ils s'étendent à peu près verticalement l'un devant l'autre lorsque le dispositif est en place, le radiateur étant l'élément qui est le plus en avant par rapport au sens d'avancement du véhicule. Les flux d'air supérieur et inférieur suivent des trajectoires horizontales lorsqu'ils traversent successivement ces éléments.

La cavité haute 11 correspond à la région haute de l'enceinte interne que délimite le carter 2 : elle s'étend au dessus de l'ensemble formé par le radiateur 4 et l'évaporateur 3 à travers lesquels circulent le flux inférieur et le flux supérieur.

L'enceinte 2 délimite d'une part une gaine de circulation des flux inférieur et supérieur qui s'étend depuis les entrées 6, 9 tout en refermant l'évaporateur 3 et le radiateur 4, et d'autre part la cavité haute 11 qui est située au dessus de cette gaine et qui communique avec cette gaine au niveau d'une région située en aval du radiateur 4.

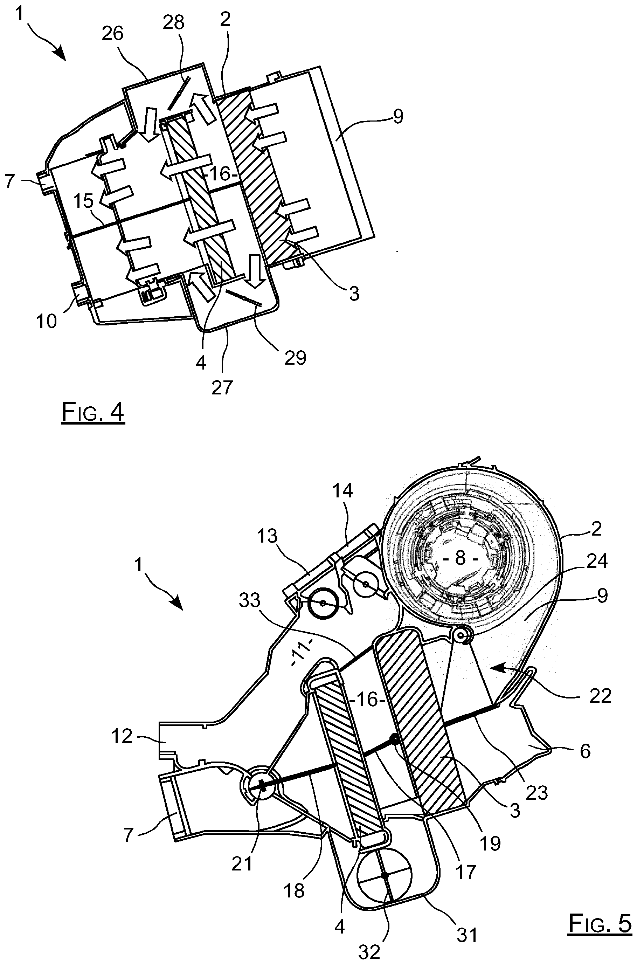

La gaine et la cavité haute sont partagées chacune en une partie gauche et une partie droite par une paroi centrale de l'enceinte 2, pour dédoubler le flux inférieur et le flux supérieur. Cette paroi centrale apparaît dans la figure 4 où elle est repérée par 15.

La cavité haute 11 comporte trois sorties supérieures gauches et trois sorties supérieures droites symétriques les unes des autres par rapport à la paroi centrale. L'une des sorties supérieures gauche, repérée par 12 est sensiblement contiguë à la sortie inférieure gauche 7 en étant au dessus de celle-ci. Cette sortie supérieure gauche 12 est ainsi située dans le prolongement de la trajectoire naturelle du flux supérieur gauche traversant successivement la partie gauche de la portion haute de l'évaporateur 3 et du radiateur 4.

Les deux autres sorties supérieures gauches, repérées par 13 et 14, sont réalisées dans la paroi correspondant au dessus du carter 2 et elles sont situées en vis-à-vis de la région s'étendant entre l'évaporateur 3 et le radiateur 4, cette région intermédiaire étant repérée par 16.

L'air du flux supérieur gauche introduit dans la partie gauche de la cavité haute 11 est ainsi refoulé par les sorties supérieures gauche 12, 13, 14. En pratique, la sortie inférieure gauche 7 correspond à la région des pieds du passager arrière gauche de l'habitacle, la sortie supérieure gauche 12 correspond à une autre aération de la partie arrière gauche de l'habitacle. Les sorties supérieures gauche 13 et 14 correspondent respectivement à une aération avant gauche et au désembuage des vitrages situés en partie avant gauche de l'habitacle.

Comme on l'a compris, la structure générale du dispositif est symétrique par rapport à la paroi centrale verticale séparant l'enceinte en une partie gauche et une partie droite, de sorte notamment que les sorties droites du dispositif sont les symétriques des sorties gauche définies ci-dessus par rapport à ce plan médian.

On a donc un flux inférieur droit et un flux supérieur droit qui circulent dans la partie droite de l'enceinte, de manière analogue aux flux supérieur et inférieur gauches, et qui sont refoulés au niveau des sorties inférieures et supérieures droites de l'enceinte.

Comme visible dans les figures, le dispositif selon l'invention est équipé d'un premier et d'un second volets gauches qui séparent le flux inférieur gauche du flux supérieur gauche, repérés par 17 et 18. Ces deux volets de répartition sont montés respectivement en amont et en aval du radiateur 4, dans la partie gauche de la gaine de passage des flux inférieur et supérieur.

Ces deux volets gauches de répartition sont des volets rotatifs d'orientation globalement horizontale situés sensiblement à mi-hauteur par rapport au radiateur.

Le premier volet gauche de répartition 17 est ainsi monté rotatif autour d'un axe 19 horizontal orienté transversalement par rapport aux flux inférieur, cet axe 19 longeant une face de l'évaporateur 3 qui est sa face aval par rapport aux flux d'air qui le traversent.

Le volet gauche de répartition 17 a une forme généralement rectangulaire, dont l'axe 19 coïncide avec l'un des bords. Le bord opposé à celui de l'axe 19 longe une face du radiateur 4 qui est sa face amont par rapport aux flux inférieur et supérieur. Ce bord est équipé d'un joint assurant qu'il reste au contact de la face amont du radiateur 4 pour toute position angulaire du volet.

Le second volet gauche de répartition, à savoir le volet 18, est monté de manière symétrique au volet gauche 17 par rapport à un plan transversal correspondant à l'orientation générale du radiateur 4. Ce volet gauche 18 est ainsi monté rotatif autour d'un axe 21 horizontal d'orientation transversale par rapport aux flux d'air, cet axe 21 étant situé sensiblement à mi-distance entre le radiateur 4 et les sorties 7 et 12. L'axe 21 est situé sensiblement à mi-hauteur par rapport au radiateur 4 et par rapport aux sorties gauches 7 et 12.

Le second volet gauche de répartition 18 a lui aussi une forme généralement rectangulaire dont un bord coïncide avec son axe de rotation 21. Le bord opposé à celui de l'axe 21 est lui aussi équipé d'un joint pour rester en appui contre la face aval du radiateur 4 pour toute position angulaire de ce second volet.

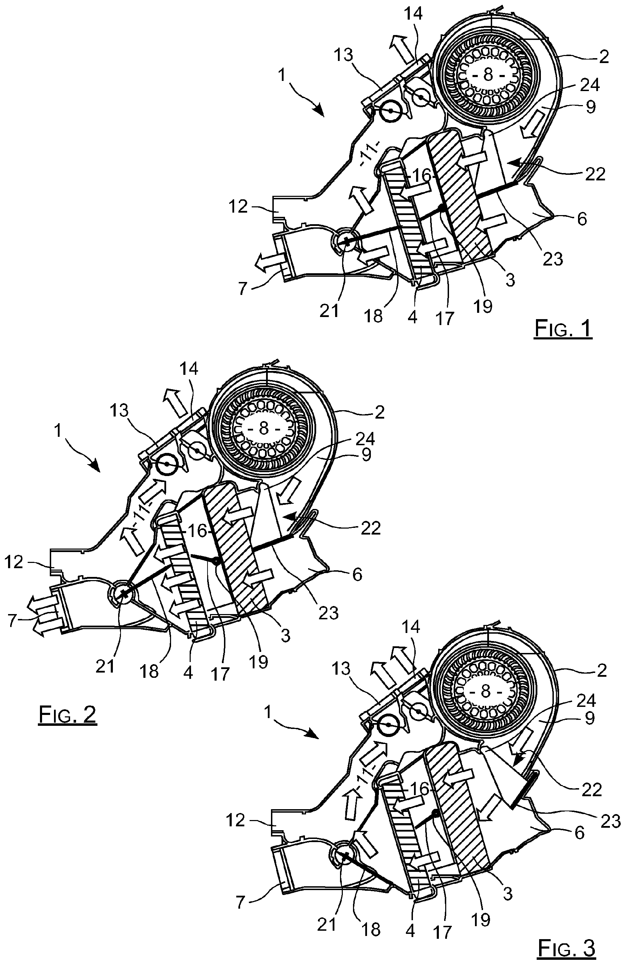

Dans la configuration de la figure 1, le premier et le second volet gauches 17 et 18 occupent des positions médianes : ils s'étendent dans le prolongement l'un de l'autre selon un plan situé sensiblement à mi-hauteur du radiateur 4. Le flux supérieur gauche et le flux inférieur gauche traversent respectivement une portion supérieure et une portion inférieure de la partie gauche du radiateur 4 qui ont alors des aires sensiblement identiques.

Dans ces conditions, le flux supérieur gauche et le flux inférieur gauche reçoivent la même puissance thermique lorsqu'ils traversent le radiateur, de sorte qu'il sont réchauffés de manière équivalente, ce qui correspond à une situation dans laquelle la demande de réchauffage au niveau des sorties supérieures gauches et au niveau des sorties inférieures gauches est sensiblement identique.

Dans la configuration de la figure 2, les deux volets gauches sont en position haute : les bords mobiles de ces volets gauches sont situés sensiblement aux deux tiers de la hauteur du radiateur 4. L'aire de la portion inférieure de la partie gauche du radiateur, qui est traversée par le flux inférieur gauche, vaut ainsi environ le double de l'aire de la portion supérieure de cette partie gauche, de sorte que le flux supérieur gauche reçoit environ deux fois moins de chaleur que le flux inférieur gauche.

Cette configuration correspond à une situation dans laquelle la demande en air chaud est deux fois plus importante au niveau de la sortie inférieure gauche qu'au niveau des sorties supérieures gauches.

Autrement dit, les volets de répartition gauche 17 et 18 permettent d'ajuster la section de passage des deux flux gauches en fonction de la demande thermique qui est faite au niveau de la sortie inférieure gauche et des sorties supérieures gauches.

Le dispositif étant symétrique par rapport à la paroi centrale 15, il comporte dans sa partie droite non représentée, un premier volet de répartition droite et un second volet de répartition droite qui sont les symétriques des volets 17 et 18 par rapport à cette paroi 15.

Ces deux volets non visibles dans les figures, qui équipent la partie droite sont actionnés indépendamment des volets de répartition gauche 17 et 18, de pour répartir la surface de radiateur traversée par le flux inférieur droit et supérieur droit de manière complètement indépendante de la répartition de la surface traversée par le flux inférieur gauche et supérieur gauche qui est elle conditionnée uniquement par les positions des volets 17 et 18.

Complémentairement, le dispositif selon l'invention est encore équipé d'un troisième volet de répartition des flux, repéré par 22, et qui est situé en amont de l'évaporateur 3, entre cet évaporateur 3 et les entrées inférieure et supérieure 6 et 9. Ce troisième volet 22 est un volet unique qui est commun à la partie droite et à la partie gauche de l'enceinte, la paroi centrale étant ouverte dans la région de ce troisième volet 22.

Ce troisième volet 22 est un volet rotatif comportant une paroi rectangulaire principale rectangulaire 23 qui est reliée par des cloisons latérales à son axe de rotation, repéré par 24, qui est déporté par rapport à cette paroi principale 23 tout en s'étendant parallèlement à celle-ci.

Comme visible dans les figures, ce troisième volet de répartition 22 est ainsi mobile entre une position déployée dans laquelle il s'étend sensiblement à mi-hauteur de l'évaporateur 3 perpendiculairement à celui-ci, comme dans les figures 1 et 2, et une position rétractée correspondant à celle de la figure 3.

En position déployée, le volet 22 sépare le flux supérieur issu de la volute 8 et introduit par l'entrée supérieure 9, du flux inférieur admis par l'entrée inférieure 6, de sorte que ces deux flux traversent respectivement une portion supérieure et une portion inférieure de l'évaporateur 3, sans risque qu'ils ne se mélangent.

En position rétractée, le volet 22 laisse communiquer librement les deux entrées 6 et 9 avec l'ensemble de la section de passage de l'évaporateur 3. Cette configuration qui correspond notamment à la figure 3 permet d'augmenter la section de passage du flux supérieur à travers l'évaporateur 3 et à travers le radiateur 4 lorsque le flux inférieur est désactivé, c'est-à-dire lorsqu'il n'existe pas de demande thermique ni au niveau des sorties inférieures gauche ni au niveau de sorties inférieures droites.

Autrement dit, le troisième volet permet, en cas de désactivation du flux inférieur, d'assurer que le flux supérieur traverse toute la section de l'évaporateur 3 ainsi que toute la section du radiateur 4, de manière à pouvoir bénéficier d'une puissance thermique sensiblement doublée.

Dans ce cas, et comme illustré à la figure 3, le second volet gauche 18 de répartition est abaissé, pour obturer la sortie inférieure 7 afin d'assurer que la totalité du flux gauche issu du radiateur 4 est injectée dans la partie gauche de la cavité haute 11 pour être refoulée au niveau des sorties supérieures gauches 12, 13 et 14. Il en va de même du second volet droit qui n'est pas visible dans les figures.

Ainsi, le troisième volet 23 permet d'arroser la section complète du radiateur lors du fonctionnement du système en simple flux, afin d'accroître la puissance thermique transférée.

En cas de désactivation du flux supérieur, une configuration analogue peut être adoptée pour que toute la surface de l'évaporateur et du radiateur soient traversées uniquement par le flux inférieur. Il suffit alors de rétracter le troisième volet 22, et de placer le second volet gauche et le second volet droit en position haute maximale pour que tout le flux ayant traversé le radiateur soit dirigé vers les sorties inférieures.

Dans une variante représentée à la figure 4, la portion inférieure de l'enceinte 2 comporte une extension latérale gauche 26 et une extension latérale droite 27 permettant au flux d'air inférieur gauche et au flux d'air inférieur droit de partiellement contourner le radiateur 4 au lieu de le traverser. L'extension gauche 26 est équipée d'un volet de régulation gauche 28 de type papillon, permettant de réguler le débit d'air contournant le radiateur, et de manière analogue, l'extension droite comporte aussi un volet papillon droit 29 de régulation de débit.

Dans ces conditions, et comme visible à la figure 4, une partie de l'air du flux inférieur gauche traverse le radiateur 4, alors qu'une autre partie de ce flux inférieur gauche prélevée en partie gauche de la région intermédiaire 16 contourne le radiateur 4. Ces deux parties sont réunies en partie gauche de la portion inférieure de la région aval du radiateur 4.

Ainsi, l'ouverture du volet de régulation gauche 28 permet de faire baisser la température de l'air du flux inférieur gauche qui est refoulé dans la sortie inférieure gauche 7 alors que la fermeture de ce volet 28 permet au contraire d'augmenter cette température. Ceci n'a pas d'incidence sur la température de l'air du flux supérieur gauche qui est elle conditionnée par la position des volets de répartition 17 et 18.

De la même manière, le volet de régulation droite 29 permet de modifier la température du flux inférieur droit qui est refoulé au niveau de la sortie inférieure droite 10, sans incidence sur la température du flux supérieur droit.

Autrement dit, grâce aux extensions latérales 26 et 27 avec leurs volets de régulation internes 28 et 29, le dispositif permet de délivrer quatre flux d'air à quatre températures différentes au niveau des sorties inférieures et supérieures gauche et droite, ce qui permet d'avoir quatre zones de températures différentes dans l'habitacle.

Dans une autre variante de l'invention qui est représentée à la figure 5, l'enceinte 2 est pourvue d'extensions du même type que les extensions latérales 26 et 27, mais qui sont placées sous le bord inférieur du radiateur 4 pour en contourner, de manière analogue la partie droite et la partie gauche.

Tout comme dans la première variante de la figure 4, chacune des deux extensions de la variante de la figure 5 comporte un volet de régulation de débit, ces volets permettant d'ajuster le débit d'air frais traversant chaque extension pour obtenir des températures différentes au niveau des sorties inférieures gauche et droite.

La figure 5 montre l'une de ces extensions, repérée par 31 et intégrant un volet de régulation 32 du type volet papillon.

Le choix d'extensions latérales comme dans la figure 4 ou bien d'extensions inférieures comme dans la variante de la figure 5 est conditionné par l'espace disponible dans le véhicule devant être équipé du dispositif selon l'invention.

Par ailleurs, il est possible de réaliser un mélange d'air au niveau du flux supérieur gauche et du flux supérieur droit, en remplaçant la paroi 33 qui sépare la région intermédiaire 16 et la cavité haute 11, par deux volets de mélange, à savoir un volet gauche et un volet droit. De tels volets de mélange permettent d'admettre dans la cavité haute un mélange d'air issu du radiateur 4 et d'air issu de l'évaporateur 3 et dévié vers la cavité haute directement au niveau de ces volets.

## Revendications

1. Dispositif (1) de conditionnement d'air de véhicule automobile du type à double flux, comportant une enceinte (2) renfermant un évaporateur (3) et un radiateur (4), agencée pour qu'un flux d'air inférieur admis par une entrée inférieure (6) de l'enceinte (2) traverse successivement une portion inférieure de l'évaporateur (3) et du radiateur (4) avant d'être refoulé par une sortie inférieure (7) de l'enceinte (2), et pour qu'un flux d'air supérieur admis par une entrée d'air supérieure (9) de l'enceinte (2) traverse successivement une portion supérieure de l'évaporateur (3) et du radiateur (4) avant d'être refoulé par au moins une sortie supérieure (12, 13, 14) de l'enceinte (2), ce dispositif comportant un premier volet de répartition (17) situé entre l'évaporateur (3) et le radiateur (4) et un second volet de répartition (18) situé entre le radiateur (4) et au moins une sortie d'air (12, 13, 14), chaque volet de répartition (17, 18) étant un volet rotatif séparant le flux inférieur du flux supérieur en ayant un bord longeant une face du radiateur (4) tout en étant mobile entre une position supérieure et une position inférieure, pour ajuster la répartition des sections de passage du flux inférieur et du flux supérieur à travers le radiateur (4).

2. Dispositif selon la revendication 1, comportant un troisième volet (22) situé entre d'une part les entrées d'air supérieure (6) et inférieure (9) et d'autre part l'évaporateur (3), ce troisième volet (22) étant mobile entre une position déployée dans laquelle il sépare le flux admis par l'entrée supérieure (9) du flux admis par l'entrée inférieure (6), et une position rétractée de libre circulation entre l'entrée d'air supérieure (9) et l'entrée d'air inférieure (6) et l'évaporateur (3).

3. Dispositif selon la revendication 1 ou 2, comportant une paroi interne séparant l'enceinte (2) en une partie gauche et une partie droite, et comportant un premier volet gauche de répartition (17) et un premier volet droit de répartition qui sont montés symétriquement de part et d'autre de cette paroi, ainsi qu'un second volet gauche de répartition (18) et un second volet droit de répartition montés symétriquement de part et d'autre de la paroi centrale.

4. Dispositif selon la revendication 3, dans lequel l'enceinte (2) comporte une extension gauche (26) et une extension droite (27) délimitant chacune un canal contournant la portion inférieure du radiateur (4), ces extensions gauche et droite (26, 27) débouchant respectivement en partie gauche et en partie droite d'une région située en aval du radiateur (4), chaque extension (26, 27) intégrant un volet de régulation (28, 29) de débit, de manière à établir en partie gauche et en partie droite de la région aval du radiateur (4) un flux gauche et un flux droite ayant des températures différentes.

5. Dispositif selon la revendication 4 dans lequel les extensions (31) s'étendent sous le radiateur lorsque le dispositif est en place dans un véhicule.

6. Dispositif selon la revendication 4, dans lequel les extensions (26, 27) s'étendent latéralement par rapport à la portion inférieure du radiateur lorsque le dispositif est en place dans un véhicule.

## Patentansprüche

1. Klimaanlage (1) mit doppeltem Fluss für ein Kraftfahrzeug, welche ein Gehäuse (2) aufweist, welches einen Verdampfer (3) und einen Radiator (4) umschließt und dafür eingerichtet ist, damit ein unterer Luftfluss, welcher durch einen unteren Eintritt (6) des Gehäuses (2) aufgenommen wird, nacheinander einen unteren Abschnitt des Verdampfers (3) und des Radiators (4) durchquert, bevor er durch einen unteren Austritt (7) des Gehäuses (2) befördert wird, und damit ein oberer Luftfluss, welcher durch einen oberen Eintritt (9) des Gehäuses (2) aufgenommen wird, nacheinander einen oberen Abschnitt des Verdampfers (3) und des Radiators (4) durchquert, bevor er durch mindestens einen oberen Austritt (12, 13, 14) des Gehäuses (2) befördert wird, wobei diese Anlage eine erste Verteilungsklappe (17), welche zwischen dem Verdampfer (3) und dem Radiator (4) angeordnet ist, und eine zweite Verteilungsklappe (18) aufweist, welche zwischen dem Radiator (4) und mindestens einem Luftaustritt (12, 13, 14) angeordnet ist, wobei jede Verteilungsklappe (17, 18) eine Drehklappe ist, welche den oberen Fluss von dem unteren Fluss trennt, indem sie einen Rand besitzt, welcher an einer Fläche des Radiators (4) entlang läuft, wobei sie dabei zwischen einer oberen Position und einer unteren Position beweglich ist, um die Verteilung der Durchflussquerschnitte des unteren Flusses und des oberen Flusses durch den Radiator (4) einzustellen.

2. Anlage nach Anspruch 1, aufweisend eine dritte Klappe (22), welche zwischen einerseits dem oberen (6) und unteren (9) Lufteintritt und andererseits zwischen dem Verdampfer (3) angeordnet ist, wobei diese dritte Klappe (22) zwischen einer entfalteten Position, in welcher sie den durch den oberen Eintritt (9) aufgenommenen Fluss von dem durch den unteren Eintritt (6) aufgenommenen Fluss zu trennen, und einer zurückgezogenen Position zur freien Zirkulation zwischen dem oberen Lufteintritt (9) und dem unteren Lufteintritt (6) und dem Verdampfer (3) beweglich ist.

3. Anlage nach Anspruch 1 oder 2, aufweisend eine innere Wand, welche das Gehäuse (2) in einen linken Teil und einen rechten Teil abteilt, und aufweisend eine erste linke Verteilungsklappe (17) und eine erste rechte Verteilungsklappe, welche symmetrisch beiderseits dieser Wand montiert sind, sowie eine zweite linke Verteilungsklappe (18) und eine zweite rechte Verteilungsklappe, welche symmetrisch beiderseits der zentralen Wand montiert sind.

4. Anlage nach Anspruch 3, bei welcher das Gehäuse (2) eine linke Erweiterung (26) und eine rechte Erweiterung (27) aufweist, welche jeweils einen Kanal abgrenzt, der um den unteren Abschnitt des Radiators (4) herumführt, wobei diese linke und rechte Erweiterung (26, 27) jeweils im linken Teil und im rechten Teil eines Bereichs mündet, welcher stromabwärts des Radiators (4) angeordnet ist, wobei jede Erweiterung (26, 27) eine Klappe zur Durchflussregelung (28, 29) integriert, um so im linken Teil und im rechten Teil des Bereichs stromabwärts des Radiators (4) einen linken Fluss und einen rechten Fluss mit verschiedenen Temperaturen herzustellen.

5. Anlage nach Anspruch 4, bei welcher sich die Erweiterungen (31) unter dem Radiator erstrecken, wenn die Anlage in einem Fahrzeug angeordnet ist.

6. Anlage nach Anspruch 4, bei welcher sich die Erweiterungen (26, 27) seitlich in Bezug auf den unteren Abschnitt des Radiators erstrecken, wenn die Anlage in einem Fahrzeug angeordnet ist.

## Claims

1. Double stream motor vehicle air conditioning device (1) including an enclosure (2) enclosing an evaporator (3) and a radiator (4) and arranged so that a lower air stream admitted via a lower inlet (6) of the enclosure (2) passes successively through a lower portion of the evaporator (3) and of the radiator (4) before being discharged via a lower outlet (7) of the enclosure (2) and an upper air stream admitted via an upper air inlet (9) of the enclosure (2) passes successively through an upper portion of the evaporator (3) and of the radiator (4) before being discharged via at least one upper outlet (12, 13, 14) of the enclosure (2), this device including a first distribution flap (17) situated between the evaporator (3) and the radiator (4) and a second distribution flap (18) situated between the radiator (4) and at least one air outlet (12, 13, 14), each distribution flap (17, 18) being a rotary flap separating the lower stream from the upper stream by virtue of having an edge extending along a face of the radiator (4) whilst being mobile between an upper position and a lower position to adjust the distribution of the flow sections of the lower stream and the upper stream through the radiator (4).

2. Device according to Claim 1, including a third flap (22) situated between the upper air inlets (6) and the lower air inlets (9) on the one hand and the evaporator (3) on the other hand, this third flap (22) being mobile between a deployed position in which it separates the stream admitted via the upper inlet (9) from the stream admitted via the lower inlet (6) and a retracted position of free circulation between the upper air inlet (9) and the lower air inlet (6) and the evaporator (3).

3. Device according to Claim 1 or 2, including an internal wall dividing the enclosure (2) into a left-hand portion and a right-hand portion and including a first distribution flap (17) on the left-hand side and a first distribution flap on the right-hand side that are mounted symmetrically on respective opposite sides of this wall and a second distribution flap (18) on the left-hand side and a second distribution flap on the right-hand side that are mounted symmetrically on respective opposite sides of the central wall.

4. Device according to Claim 3, wherein the enclosure (2) includes a left-hand extension (26) and a right-hand extension (27) each delimiting a channel bypassing the lower portion of the radiator (4), these left-hand and right-hand extensions (26, 27) respectively discharging into the left-hand portion and into the right-hand portion of a region situated on the downstream side of the radiator (4), each extension (26, 27) incorporating a flowrate regulator flap (28, 29) so as to establish in the left-hand portion and in the right-hand portion of the region downstream of the radiator (4) a left-hand stream and a right-hand stream having different temperatures.

5. Device according to Claim 4, wherein the extensions (31) extend under the radiator when the device is in place in a vehicle.

6. Device according to Claim 4, wherein the extensions (26, 27) extend laterally with respect to the lower portion of the radiator when the device is in place in a vehicle.
